Europäisches Patentamt

European Patent Office

Office européen des brevets

(11) Publication number: **0 269 250 B1**

# EUROPEAN PATENT SPECIFICATION

(45) Date of publication of patent specification: **26.02.92**    (51) Int. Cl.⁵: **B65G 53/06**, B65G 53/52

(21) Application number: **87309304.1**

(22) Date of filing: **21.10.87**

(54) **High density pneumatic transport method for use in powder or granular material and system for practising the method.**

(30) Priority: **21.10.86 JP 251172/86**

(43) Date of publication of application:
**01.06.88 Bulletin 88/22**

(45) Publication of the grant of the patent:
**26.02.92 Bulletin 92/09**

(84) Designated Contracting States:
**AT CH DE GB LI NL**

(56) References cited:
**FR-A- 2 339 554
GB-A- 1 094 266
US-A- 2 684 873**

**PATENT ABSTRACTS OF JAPAN, vol. 6, no.
130 (M-143)[1008], 16th July 1982; & JP - A -
57 57125 (NISSHIN SEIFUN) 06-04-1982**

**PATENT ABSTRACTS OF JAPAN, vol. 3, no.
93 (M-68), 8th August 1979, page 70 M 68; &
JP - A - 54 67984 (KOMATSU SEISAKUSHO)
31-05-1979**

(73) Proprietor: **KYOWA HAKKO KOGYO CO., LTD.
6-1, Ohtemachi 1-chome
Chiyoda-ku Tokyo-to(JP)**

Proprietor: **Kabushiki Kaisha Matsui
Seisakusho
5-26 Tanimachi 6-chome
Minamiku Osaka(JP)**

(72) Inventor: **Morimoto, Kiyoshi
71-11 Kamo Mishima-shi
Shizuoka(JP)**
Inventor: **Iwamoto, Akikazu
Kyowa-Apartment 202 1188 Shimotogari
Nagaizumi-cho Sunto-gun Shizuoka(JP)**
Inventor: **Moriyama, Masuo
2658-9 Tohgou Shimokanuki
Numazu-shi Shizuoka(JP)**
Inventor: **Sonoda, Atsuroh c/o Osaka Works
K.K. Matsui Seisakusho 2-19 Shodai Tajika
Hirakata-shi Osaka(JP)**

(74) Representative: **Nash, Keith Wilfrid et al
KEITH W. NASH & Co. Pearl Assurance
House 90-92 Regent Street
Cambridge CB2 1DP(GB)**

## Description

Field of the Invention

The present invention relates to an improved method of, and a system for, transporting a powder or granular material to a collector by the use of pressurised gas.

The invention is more specifically, but not exclusively, related to the transportation of medicine tablets.

Prior Art

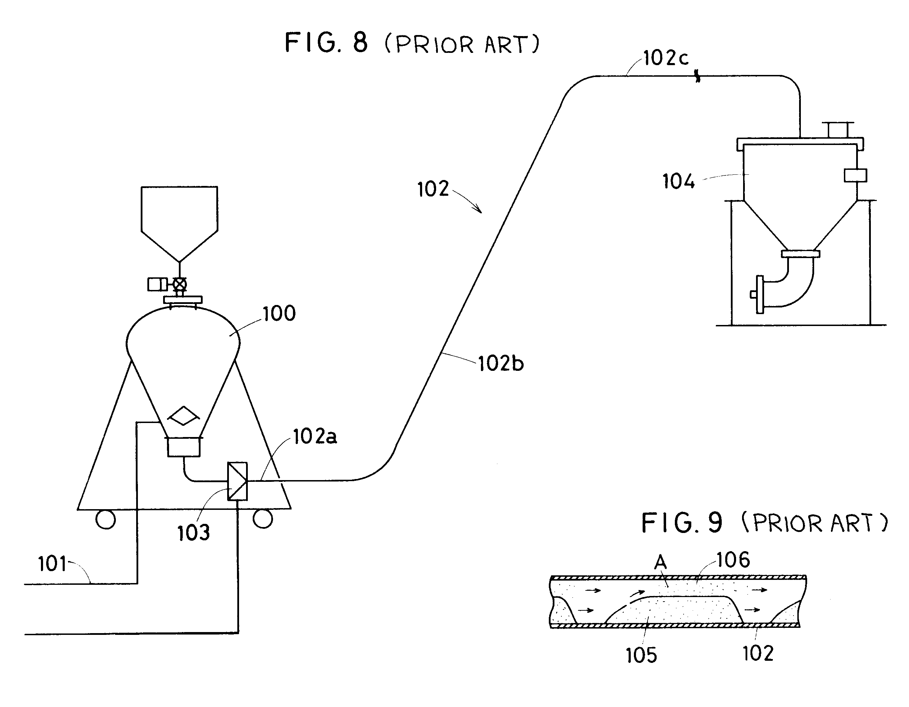

Figure 8 shows a conventional powder or granular pneumatic transport system. The system is of the kind in which, in use, a powder or granular material placed in an airtight storage container 100 is transferred from the container to a lower pipe 102a of a transport pipe 102 by gas supplied from a gas feed pipe 101. The material is formed into a plug shape by supplying pressurized gas from a pressure nozzle 103 disposed on the lower pipe 102a, and then the plug-shaped material is pneumatically transported inside an upper pipe 102c of the transport pipe 102 through an inclined pipe 102b and is finally received by a collector 104.

One disadvantage of this arrangement is that when the powder or granular material is pneumatically transported along the pipe 102 in the form of a plug, clearance 106 is often formed between the plug-shaped material and the transport pipe 102 as shown in Fig. 9, with the result that the material A on the surface of the plug-shaped material 105 is transferred from the plug and the plug shape is broken. This eventually results in unsatisfactory transfer.

Moreover, since the conventional system as described above transfers the plug-shaped material at an extremely high speed, for example several meters per second, the material undergoes strong shock forces when being received by collector 104, thus easily incurring severe damage or disintegration of the material.

Futhermore, that effect causes another problem of mutual collision between the powder or granular materials inside the transport pipe 102.

Accordingly, the application of this conventional method to the transport of materials, such as medicine tablets, of which high production quality is demanded tends to increase the number and rate of production defects in the product.

It is accordingly, a primary object of the invention to provide a method capable of pneumatically transporting a powder or granular material in high density without imparting impulse to the material or causing segregation of the material.

Another object of the invention is to provide an improved system capable of pneumatically transporting a powder or granular material without imparting impulse to the material or causing segregation of the material.

Another object of the invention is to provide an improved system capable of pneumatically transporting a powder or granular material in high density efficiently without imparting impulse to the material or causing segregation thereof.

Summary of the Invention

In one aspect, the invention relates to a high density pneumatic transport method of pneumatically transporting a powder or granular material from an airtight storage container (1) to a collector (5) through a transport pipe (4) by the use of pressurized gas, the method comprising the steps of: supplying pressurized gas intermittently to said airtight storage container (1) containing a powder or granular material therein so as to take the material out of said container (1) and feed the material into said transport pipe (4); in the time between each successive supply of gas feeding a transport plug (16) into a base end of the transport pipe (4) so as to section the material, whereby the material is successively formed into a long column (P) at high density and transported to said collector (5) by the action of the gas on said plug (16) at a very low speed; and finally receiving the material which has been transported in the form of a long column (P) into said collector (5). Such a method is known from JP-A-54-67984. According to the invention the method is characterised in that hollow and elongated transport plugs are used, and in that the speed of the material is reduced at the terminal end of the transport pipe, such that the material is received in the collector (5) in a state of substantially gravitational fall.

In another aspect, the invention relates to a high density transport system for transporting a powder or granular material by the use of pressurised gas the system comprising on airtight storage container (1); means for intermittently supplying pressurized air to said storage container; a collector (5) and a transport pipe (4) connecting said container (1) to said collector (5). Such a system is known from JP-A-54-67984. According to the invention the system is characterised in that the transport pipe (4) includes a horizontal pipe portion (42), a conical tube (9) disposed at the upstream end of said horizontal portion (42) with the caliber of the tube (9) increasing in the direction of transportation, and speed reduction means (10), disposed between the terminal end of said horizontal pipe portion (42) and said collector (5), for reducing the speed of the transported material such that the material falls into the collector (5) substantially under gravitational fall; and in that the system includes hollow elongated transport plugs (16) adapted to be fed into a base end of said transport pipe to section said material.

The invention is suited for use with capsules, powder, granules, and other solid substances in addition to compression moldings such as medicine tablets, candies, electrical or electronic parts, ie materials which are required to have no cracks or chips.

Brief Description of the Drawings

Other objects and advantages of the invention will be apparent from the following description, the appending claims and the accompanying drawings, wherein:

Fig. 1 is a schematic diagram of a preferred embodiment of the invention;

Fig. 2 is a sectional view to an enlarged scale, illustrating the construction of a hollow elongated transport plug loading portion of the arrangement of Fig. 1;

Fig. 3 (a), (b) are time charts explaining supply timing of transport gas and a transport plug, respectively;

Fig. 4 shows an embodiment of transport plug;

Figs. 5 and 5a show another embodiment of transport plug;

Figs. 6, 6a and 6b show yet another embodiment of transport plug;

Figs. 7 shows a long column formed in the transport pipe;

Fig. 8 shows a conventional system; and

Fig. 9 shows a plug formed of the powder or granular material in the conventional system.

Detailed Description of the Invention

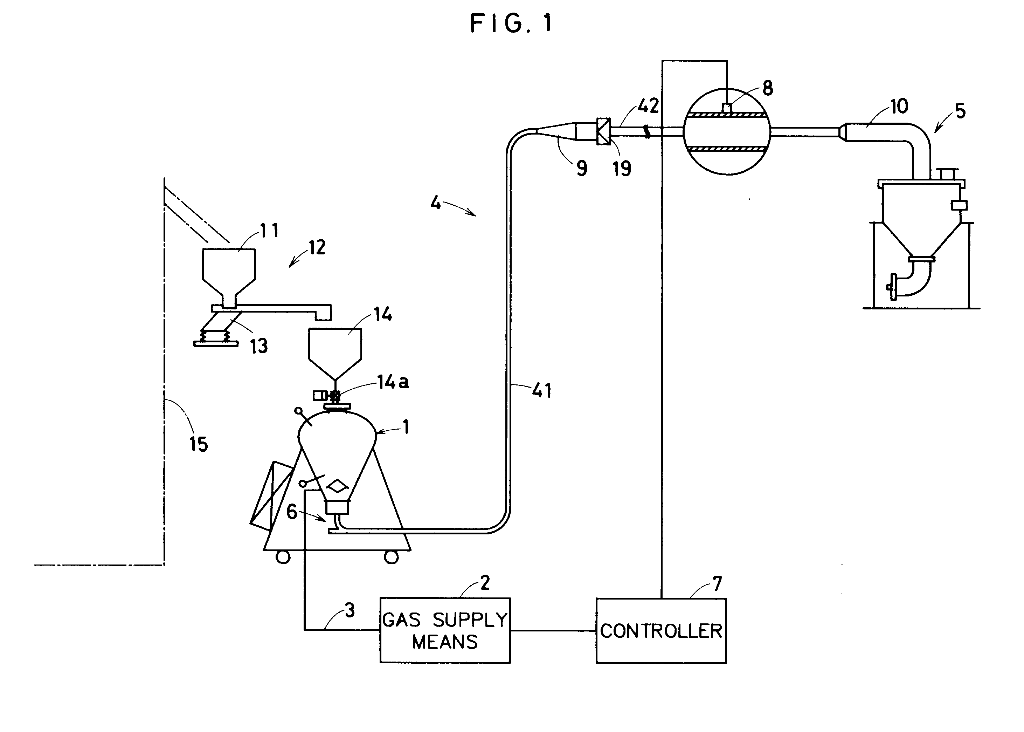

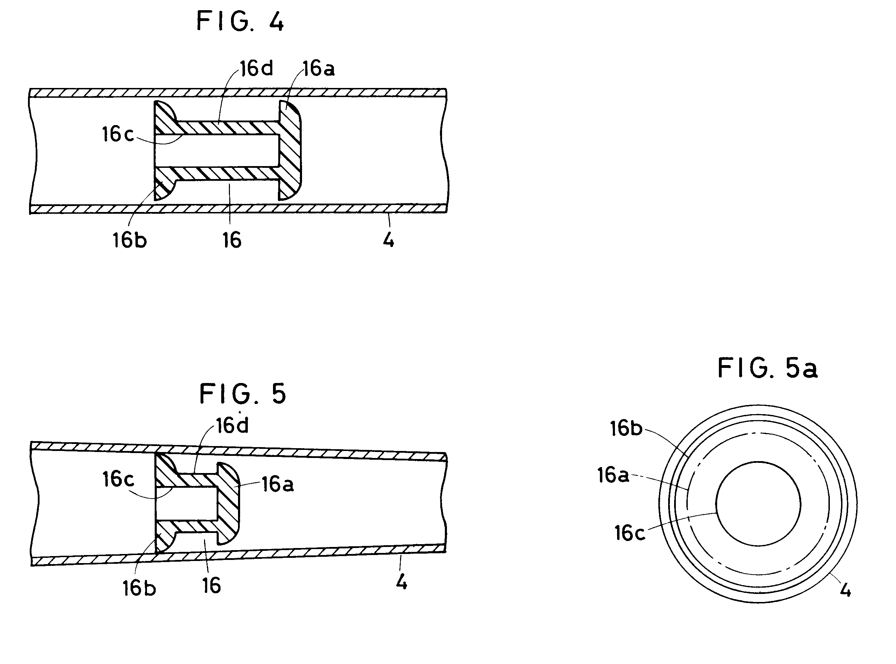

A description will now be given of one embodiment of the invention with reference to the drawings. The embodiment shown herein uses pressurised air to transport medicine tablets. Fig 1 is a schematic diagram of the system of the invention. The numeral 1 designates an airtight storage container. Tablets supplied from compression molding 15 are received in the container 1 through a feeder 12. The tablets thus received in the container 1 are transferred into a transport pipe 4 by means of pressurised air supplied intermittently to the container 1 via an air feed pipe 3 by a gas supply means 2. In each time period between successive supplies of pressurised air, transport plug 16 (17), eg as shown in Figs. 4, 5 to 6b, is fed into the base end of the pipe 4.

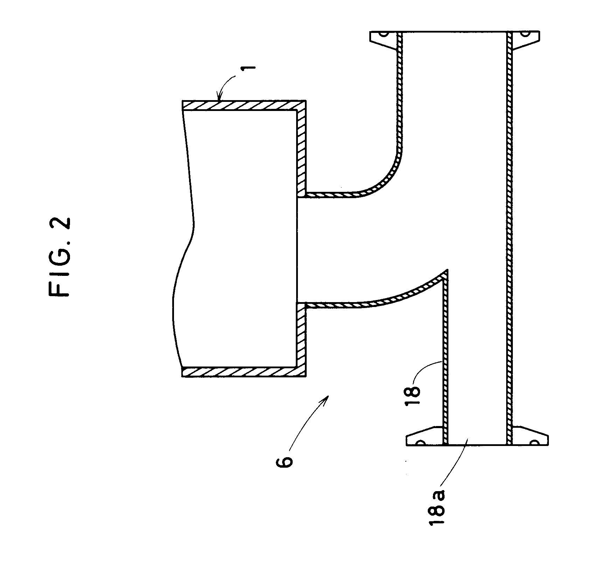

Fig. 2 shows the construction of a transport plug loading portion 6 formed at the base end of the pipe 4. The portion 6 has a loading opening 18a open at one end of a branch pipe 18 communicating with the pipe 4 extending from the container 1.

The portion 6 illustrated is such that the plug is manually loaded, but the invention is not limited to the embodiment shown and may include a loading portion which is such as to permit automatic loading from a cassette containing a multiplicity of plugs therein which are to be transported by the pressurized gas.

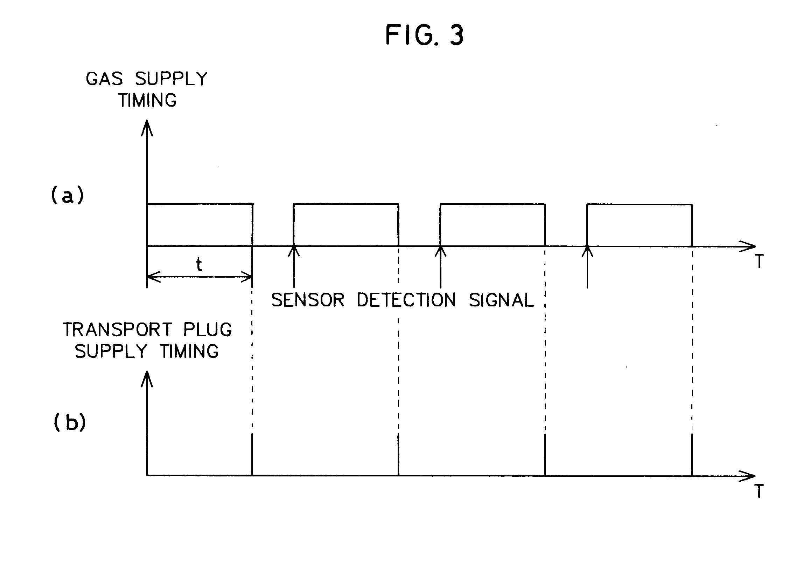

Figs. 3 (a), (b) are time charts explaining supply timing of pressurized gas and transport plugs, respectively. A plug is fed at the end of every period of supply of pressurized gas, and the next supply of air is carried out every time a sensor to be described later detects a plug disposed at a suitable position in the pipe 4.

Referring again to Fig. 1, a feeder 12 is designed to feed tablets into the airtight storage container 1 by using a magnetic vibrator 13 which is driven to vibrate a hopper 11 containing tablets sent from compression molding machine 15. The container 1 is provided with a hopper 14 and is adapted to contain tablets fed from a feeder 12 by controlling a valve 14a disposed below the bottom of the hopper 14. The amount of tablets stored in the container 1 is detected by a level switch and when the level of tablets falls below a predetermined lower limit, the valve 14a is opened and at the same time the magnetic vibrator 13 is driven to start automatic feeding.

The transport pipe 4 comprises a riser portion 41 rising at a suitable gradient from the airtight storage container 1 and a horizontal pipe portion 42 extending from the riser portion 41. The pipe 4 is provided at the initial end of the pipe portion 42 with a pipe 9 comprising a conical tube. At the terminal end of the portion 42 with an elbow-shaped pipe 10 which has a larger caliber than that of pipe 42 and is connected to a collector 5. The pipes 9 and 10 each constitute a speed reduction means, respectively.

The speed reduction means 10 may be provided in various constructions other than the elbow-shaped pipe of the type described, such that the means can reduce the speed of a material which has been transported by pressurised air. Accordingly, besides the above mentioned construction, a pipe of simple construction such as, for example a perforated pipe may be employed.

The horizontal pipe 42 is provided at a suitable portion with a sensor 8 for detecting the passage of the transport plug. The sensor 8 sends a detection signal to a controller 7 when it detects the plug 16 (17), and the controller 7, upon receipt of the signal, drives a gas supply means 2 to supply the next charge of pressurised air to the storage container 1 (see Fig. 3).

The sensor 8 of the kind described is such as to be capable of discriminating between the material to be transported and the transport plug. For example, a color sensor may be used. The length of the transport pipe 4 may be left to users' discretion. In addition to the construction described above, a pressure booster 19 may be employed to compensate for reduced transport pressure in the pipe 4, when the pipe is long.

Next, an embodiment of a hollow elongated transport plug used in the invention will be described.

Fig. 4 shows an embodiment of the transport plug used in a transport pipe whose inlet and outlet caliber are substantially the same as those of a straight pipe (transport pipe). The plug 16 has a spool-like shape with a flat mushroomlike front portion 16a and a rear portion 16b. The front portion 16a is connected to a rear portion 16b by a stem 16d. Formed in about the centre of the rear portion 16b is a hollow hole 16c leading to the stem 16d.

The outer peripheral edge of the front portion 16a is substantially the same as that of the rear portion 16b and the transport plug 16 is formed of a soft material such as silicone rubber and is so sized as to come in close contact with the inside surface of the transport pipe 4. The plug 16 is propelled along the inside of the pipe 4 by pressurised gas applied to the hollow hole 16c.

Fig. 5 shows another embodiment of the plug used in a pipe (transport pipe) different in its inlet and outlet caliber. The plug 16 shown is similar in shape to that shown in Fig. 4, but the rear portion 16b is larger in diameter than the front portion 16a, so that when the plug 16 passes through a smaller caliber portion of the pipe, both the front portion 16a and the rear portion 16b are deformed so as to bring their peripheral edges into close contact with the inside surface of the pipe 4. Fig. 5a shows the transport plug 16 as seen from the rear side thereof.

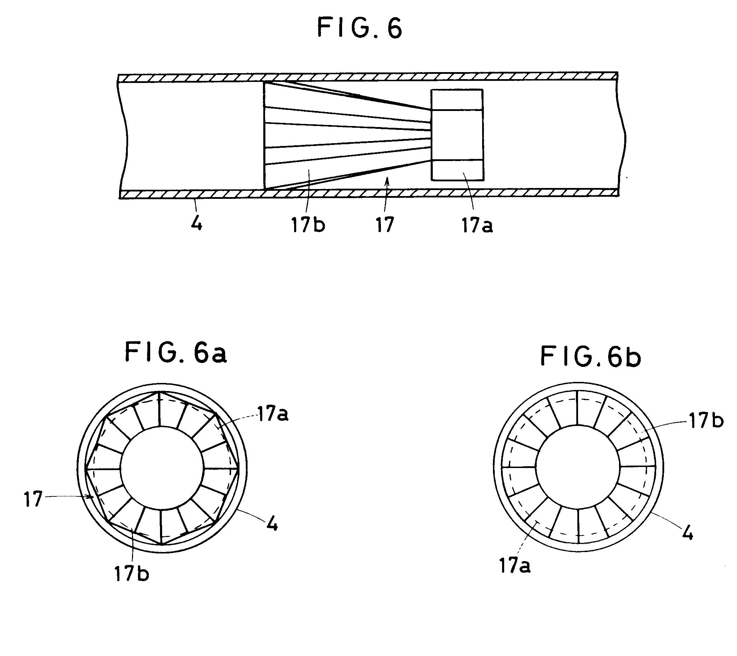

The transport plug 17 shown in Fig. 6 has a form similar to that of a badminton shuttlecock. The plug 17 has a plurality of rear feathers 17b made of thin Teflon (Teflon is a Trade Mark) material and formed like a petal and has a flat top, made of Teflon, in the head portion 17a. When the plug receives gas pressure from behind the rear feathers 17b, the feathers 17b being folded as shown in Fig. 6a, the feathers 17b are opened to come in close contact with the inside surface of the pipe 4 as shown in Fig. 6b and receive a propelling force.

Further, a description will now be given of a transport method. Materials are taken out of the container 1 into the transport pipe 4 by supplying pressurized air from gas supply means 2. A transport plug 16 (17) is fed into a base end of the pipe 4 and pressurized air is supplied for a specified time by driving the gas supply means 2. The length supply time t of pressurized air into the container 1 is set to be of sufficient duration for a sufficient amount of powder or granular material to be fed into the transport pipe 4 to form a suitable length of a column. The next supply of pressurised air to move the plug 16 is commenced shortly after a detection signal from the sensor 8 disposed in a horizontal pipe portion 42 is generated.

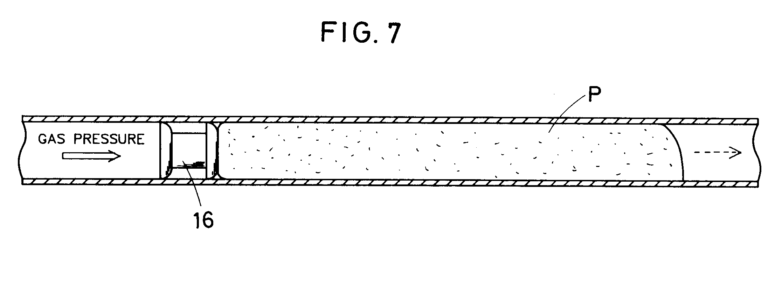

In this manner, the powder or granular material is taken in suitable amounts out of the storage container 1, passes through a riser portion 41 of the transport pipe 4, rises and thereafter reaches a horizontal pipe portion 42 accompanied with the transport plug 16 (17), whereupon the material is reduced in speed by means of a pipe 9 with a gradually enlarged outlet caliber disposed at the initial end of the horizontal pipe portion 42, before blocking up the horizontal pipe portion 42. Then, the material is pushed by the transport plug 16 (17) and is forcedly moved forward through the horizontal pipe portion 42, with the result that the material is formed into a long column material P inside the pipe 42 as shown in Fig. 7. The material P thus formed into a long column is transported intact at very low speed through the pipe 42 and is again reduced in speed by means of the speed reduction means 10 at the terminal end of the pipe 42 and finally falls into the collector 5 in the state of substantially gravitational free fall.

The powder or granular material in the storage container 1 is successively sectioned by the plug 16 (17) on the principle described above and is transported at very low speed in the form of a long column until it finally drops into the collector 5 substantially gravitationally. Therefore, the material is not only free from impact but is also free from segregation while being pneumatically transported.

In experiments conducted by the inventors, in the case of a transport pipe five meters in length, a column about one meter long was formed and the speed of transport was as very slow as 0.1 m/sec.

It was also confirmed that there was no change in the speed of transport even in the case of a 20m transport pipe and that the length of a column was increased to about 5 meters.

As is clear from the above description, since the method of the invention makes it possible to transport a powder or granular material in high density, namely in the form of a long column, through the horizontal upper pipe 42 at very low speed, there is no danger of giving an impact to the material or causing segregation while the material is pneumaticaly transported through the transport pipe 4.

Therefore, according to the invention, the problem of producing cracks and chips which is inherent in the conventional pneumatic transport, may be completely solved.

Accordingly, the method of the invention is suited for transporting tablets of medicine which need to be of high quality during production and compression moldings of specified shape.

Consequently, it is not too much to say that the present invention securely provides industries with more substantial profit potentials in that the problem which is inherent in the conventional pneumatic methods has been completely solved.

The invention may be embodied in other specific forms without departing from the essential characteristics thereof. The present embodiment is therefore to be considered in all respects as illustrative and not restrictive, the scope of the invention being indicated by the appended claims rather than by the foregoing description.

**Claims**

1. A high density pneumatic transport method of pneumatically transporting a powder or granular material from an airtight storage container (1) to a collector (5) through a transport pipe (4) by the use of pressurized gas, the method comprising the steps of:

supplying pressurized gas intermittently to said airtight storage container (1) containing a powder or granular material therein so as to take the material out of said container (1) and feed the material into said transport pipe (4);

in the time between each successive supply of gas, feeding a transport plug (16) into a base end of the transport pipe (4) so as to section the material, whereby the material is successively formed into a long column (P) at high density and transported to said collector (5) by the action of the gas on said plug (16) at a very low speed; and

finally receiving the material which has been transported in the form of a long column (P) into said collector (5) characterised in that hollow and elongated transport plugs are used, and in that the speed of the material is reduced at the terminal end of the transport pipe, such that:

the material is received in the collector (5) in the state of substantially gravitational fall.

2. A high density transport system for transporting a powder or or granular material by the use of pressurised gas, the system comprising an airtight storage container (1); means (2,3) for intermittently supplying pressurized air to said storage container; a collector (5) and a transport pipe (4) connecting said container (1) to said collector (5) characterised in that the transport pipe (4) includes a horizontal pipe portion (42), a conical tube (9) disposed at the upstream end of said horizontal portion (42) with the caliber of the tube (9) increasing in the direction of transportation, and speed reduction means (10), disposed between the terminal end of said horizontal pipe portion (42) and said collector (5), for reducing the speed of the transported material such that the material falls into the collector (5) substantially under gravitational fall; and in that the system includes hollow elongated transport plugs (16) adapted to be fed into a base end of said transport pipe to section said material.

3. A high density pneumatic transport system according to claim 2, characterized in that said said speed reduction means (10) comprises an elbow-shaped pipe with a larger caliber than that of said transport pipe (4).

4. A high density pneumatic transport system according to claim 2 or 3, characterized in that said transport plug has a shape similar to that of a shuttle cock, comprising a front portion (17a) and a plurality of rearward extending feather-like members (17b).

5. A high density pneumatic transport system according to claim 2 or 3, characterized in that said transport plug is of a spool-like shape with a flat mushroom-like front portion (16a).

6. A high density pneumatic transport system according to claim 5, characterized in that said front portion (16a) and a back portion (16b) of the spool-like shape are of substantially the same diameter.

7. A high density pneumatic transport system according to claim 5, characterized in that a back portion (16b) of said spool-like shape is of a diameter larger than a diameter of said front portion (16a).

8. A high density pneumatic transport system according to any one of claims 2 to 7, characterized in that said transport plug is made of silicone rubber.

9. A high density pneumatic transport system according to claim 4, characterized in that said transport plug is made of Teflon®.

**Revendications**

1. Un procédé de transport pneumatique à haute densité pour transporter de façon pneumatique une matière pulvérulente ou granuleuse à partir d'un récipient de stockage (1) étanche à l'air vers un collecteur (5) à travers une tuyauterie de transport (4) en utilisant un gaz sous pression, le procédé comprenant les étapes suivantes :

amener de façon intermittente du gaz sous pression audit récipient de stockage (1) étanche à l'air contenant une matière pulvérulente ou granuleuse de façon à enlever la matière hors dudit récipient (1) et amener la matière dans ladite tuyauterie de transport (4);

dans l'intervalle de temps entre chaque amenée successive de gaz, amener un bouchon de transport (16) dans une extrémité de base de la tuyauterie de transport (4) de façon à diviser la matière, grâce à quoi la matière est successivement formée en une longue colonne (P) à haute densité et transportée à une très faible vitesse vers ledit collecteur (5) sous l'effet du gaz sur ledit bouchon (16); et

recevoir finalement dans ledit collecteur (5) la matière qui a été transportée sous forme d'une longue colonne (P), *caractérisé en ce que l'on utilise des bouchons creux et allongés de transport et en ce que la vitesse de la matière est réduite à l'extrémité terminale de* la tuyauterie de transport afin que la matière soit reçue, dans le collecteur (5), sensiblement en état de chute sous l'effet de la pesanteur.

2. Un système de transport à haute densité pour transporter une matière pulvérulente ou granuleuse en utilisant un gaz sous pression, le système comprenant un récipient de stockage (1) étanche à l'air; des moyens (2, 3) pour amener de façon intermittente de l'air sous pression audit récipient de stockage; un collecteur (5) et une tuyauterie de transport (4) reliant ledit récipient (1) audit collecteur (5), *caractérisé en ce que la tuyauterie de transport (4) comprend une partie horizontale (42) de* tuyauterie, un tube conique (9) disposé à l'extrémité amont de ladite partie horizontale (42), le calibre du tube (9) augmentant dans le sens du transport, et des moyens réducteurs (10) de vitesse, disposés entre l'extrémité terminale de ladite partie horizontale (42) de tuyauterie et ledit collecteur (5) pour réduire la vitesse de la matière transportée afin que la matière tombe dans le collecteur (5) sensiblement sous l'effet de la pesanteur; et en ce que le système comprend des bouchons allongés creux de transport (16) aptes à être amené dans une extrémité de base de ladite tuyauterie de transport pour diviser ladite matière.

3. Un système de transport pneumatique à haute densité selon la revendication 2, *caractérisé en ce que ledit moyen (10) de réduction de vitesse comprend une tuyauterie coudée, d'un cali-*bre plus grand que celui de ladite tuyauterie de transport (4).

4. Un système de transport pneumatique à haute densité selon la revendication 2 ou 3, *caractérisé en ce que ledit bouchon de transport est d'une forme* semblable à celle d'un volant, comprenant une partie avant (17a) et plusieurs éléments (17b) s'étendant vers l'arrière en forme de plumes.

5. Un système de transport pneumatique à haute densité selon la revendication 2 ou 3, *caractérisé en ce que ledit bouchon de transport est d'une forme de type bobine*, à partie avant (16a) en forme de champignon plat.

6. Un système de transport pneumatique à haute densité selon la revendication 5, *caractérisé en ce que la partie avant (16a) et une partie arrière (16b)* de la forme du type bobine sont sensiblement de même diamètre.

7. Un système de transport pneumatique à haute densité selon la revendication 5, *caractérisé en ce que une partie arrière (16b) de la forme du type* bobine est d'un diamètre supérieur au diamètre de ladite partie avant (16a).

8. Un système de transport pneumatique à haute densité selon l'une quelconque des revendications 2 à 7, *caractérisé en ce que ledit bouchon de transport est* en caoutchouc de silicone.

9. Un système de transport pneumatique à haute densité selon la revendication 4, *caractérisé en ce que ledit bouchon transport est en Téflon®*.

**Patentansprüche**

1. Ein pneumatisches Förderverfahren mit hoher Dichte zum pneumatischen Fördern eines pulver- oder granulatförmigen Materials aus einem luftdichten Vorratsbehälter (1) zu einem Sammler (5) über ein Förderrohr (4) unter Verwendung von Druckgas, wobei das Verfahren die folgenden Stufen enthält:

intermittierende Zufuhr von Druckgas zu dem ein pulver- oder granulatförmiges Material enthaltenden luftdichten Vorratsbehälter (1), so daß das Material dem Behälter (1) entnommen und in das Förderrohr (4) geführt wird;

Einführen eines Förderstopfens (16) in der Zeit zwischen jeder aufeinanderfolgenden Gaszufuhr in ein Ausgangsende des Förderrohres (4) zum Unterteilen des Materials in Abschnitte, wodurch das Material nacheinander in eine lange Säule (P) mit hoher Dichte geformt und dem Sammler (5) durch die Einwirkung des Gases auf den Stopfen (16) mit einer sehr niedrigen Geschwindigkeit zugeführt wird; und

schließliche Aufnahme des Materials, das in der Form einer langen Säule (P) in den Sammler (5) gefördert wurde, dadurch gekennzeichnet, daß hohle und langgestreckte Förderstopfen verwandt werden und daß die Geschwindigkeit des Materials am Abschlußende des Förderrohres derart herabgesetzt wird, daß das Material in dem Sammler (5) im Zustand eines im wesentlichen durch Schwerkraft bedingten Falles aufgenommen wird.

2. Ein pneumatisches Fördersystem mit hoher Dichte zum Fördern eines pulver- oder granulatförmigen Materials unter Verwendung von Druckgas, wobei das System einen luftdichten Vorratsbehälter (1), Mittel (2, 3) zur intermittierenden Zufuhr von Druckgas zum Vorratsbehälter, einen Sammler (5) und ein den Behälter (1) mit dem Sammler (5) verbindendes Förderrohr (4) enthält, dadurch gekennzeichnet, daß das Förderrohr (4) einen horizontalen Rohrabschnitt (42), ein konisches Rohr (9), das an dem stromaufwärtigen Ende des horizontalen Abschnittes (42) angeordnet ist, wobei der Innendurchmesser des Rohres (9) in Förderrichtung zunimmt, und ein zwischen dem Abschlußende des horizontalen Rohrabschnittes (42) und dem Sammler (5) angeordnetes Mittel (10) zum Reduzieren der Geschwindigkeit des geförderten Materials enthält derart, daß das Material im wesentlichen durch durch Schwerkraft bedingten Fall in den Sammler (5) fällt, und daß das System hohle langgestreckte Förderstopfen (16) enthält, die zum Unterteilen des Materials in Abschnitte in ein Ausgangsende des Förderrohres eingeführt werden können.

3. Ein pneumatisches Fördersystem mit hoher Dichte nach Anspruch 2, dadurch gekennzeichnet, daß das Mittel (10) zum Reduzieren der Geschwindigkeit ein Kniestück mit einem größeren Innendurchmesser als der des Förderrohres (4) ist.

4. Ein pneumatisches Fördersystem mit hoher Dichte nach Anspruch 2 oder 3, dadurch gekennzeichnet, daß der Transportstopfen eine Form ähnlich der eines Federballes mit einem vorderen Abschnitt (17a) und mehreren nach hinten verlaufenden federartigen Gliedern (17b) aufweist.

5. Ein pneumatisches Fördersystem mit hoher Dichte nach Anspruch 2 oder 3, dadurch gekennzeichnet, daß der Stopfen eine spulenartige Form mit einem flachen pilzartigen Vorderabschnitt (16a) aufweist.

6. Ein pneumatisches Fördersystem mit hoher Dichte nach Anspruch 5, dadurch gekennzeichnet, daß der Vorderabschnitt (16a) und ein Hinterabschnitt (16b) der spulenartigen Form im wesentlichen den gleichen Durchmesser aufweisen.

7. Ein pneumatisches Fördersystem mit hoher Dichte nach Anspruch 5, dadurch gekennzeichnet, daß ein Hinterabschnitt (16b) der spulenartigen Form einen größeren Durchmesser als der Vorderabschnitt (16a) aufweist.

8. Ein pneumatisches Fördersystem mit hoher Dichte nach irgendeinem der Ansprüche 2 bis 7, dadurch gekennzeichnet, daß der Förderstopfen aus Silikonkautschuk besteht.

9. Ein pneumatisches Fördersystem mit hoher Dichte nach Anspruch 4, dadurch gekennzeichnet, daß der Förderstopfen aus Teflon® besteht.

FIG. 1

EP 0 269 250 B1

# FIG. 2

EP 0 269 250 B1

# FIG. 3

GAS SUPPLY
TIMING

(a)

$t$

SENSOR DETECTION SIGNAL

TRANSPORT PLUG
SUPPLY TIMING

(b)

T

EP 0 269 250 B1

FIG. 4

FIG. 5

FIG. 5a

# FIG. 6

4    17b    17    17a

# FIG. 6a

17a
17
17b
4

# FIG. 6b

17b
17a
4

EP 0 269 250 B1

FIG. 7

GAS PRESSURE

P

16

FIG. 8 (PRIOR ART)

FIG. 9 (PRIOR ART)